# EUROPÄISCHE PATENTSCHRIFT

(11) **EP 1 361 385 B1**
(45) Veröffentlichungstag und Bekanntmachung des Hinweises auf die Patenterteilung: **18.01.2006**
(21) Anmeldenummer: 03008972.6
(22) Anmeldetag: 17.04.2003
(51) Int. Cl.: F16L 13/14

(54) **Rohrpressverbindung**
Press fitted pipe joint
Tuyaux emmanché en ajustage serré à la presse

(30) Priorität: 10.05.2002 DE 20207313 U
(43) Veröffentlichungstag der Anmeldung: 12.11.2003
(73) Patentinhaber: VIEGA GmbH & Co. KG., 57439 Attendorn (DE)
(72) Erfinder: Viegener, Walter, 57439 Attendorn (DE)
(74) Vertreter: Cohausz & Florack

(56) Entgegenhaltungen:
- EP-A- 1 265 019
- DE-B- 1 243 477

## Beschreibung

Die vorliegende Erfindung betrifft ein Verbindungsstück zur Herstellung einer verpressbaren Verbindungsanordnung, mit einem in ein Rohr einfügbaren Stutzen, an dem Profilierungen zur Verpressung mit dem Rohr vorgesehen sind und der bis zu einem Anschlag in das Rohr einschiebbar ist. Ein solches Verbindungsstück ist aus der gattungsbildenden DE 12 43 477 bekannt.

Im Stand der Technik wurden bereits als Verbindungsstück ausgebildete Stützrohre vorgeschlagen, die zur Herstellung einer Pressverbindung in ein Rohr eingeschoben werden. Hierfür weist ein solches Stützrohr einen Stutzen auf, dessen Außenumfang etwa dem Innenumfang des Rohres entspricht. Zur Herstellung einer Pressverbindung wird meist eine Presshülse um einen Endabschnitt des Stutzens gelegt und diese Presshülse dann auf das Rohr gedrückt, so dass das Rohr aus Kunststoff oder einem Verbundmaterial dauerhaft gegen das Stützrohr gedrückt gehalten ist, um eine sichere Abdichtung zu erhalten. Bei solchen Stützrohren bzw. Verbindungsanordnungen besteht der Nachteil, dass nach dem Einschieben des Stutzens des Stützrohres eine vorläufige Abdichtung zwischen Rohr und Stutzen erhalten werden kann, so dass auch ohne Verpressung eine vorläufige Abdichtung erreicht wird, die allerdings nach kurzer Zeit zu einer ungewollten Leckage führen kann. Dieser Effekt wird noch verstärkt, wenn an dem Stutzen eine Aufnahme für einen Dichtring angeordnet ist, der dann nach dem Einschieben für eine Abdichtung mit dem Rohr sorgt.

Ferner ist in der nachveröffentlichten EP 1 265 019 ein Stützrohr und eine Verbindungsanordnung gezeigt, bei dem an den Rippen des Stützrohres eine Ausnehmung vorgesehen ist, um einen Strömungskanal zwischen dem Stützrohr und dem umgebenen Rohr im unverpressten Zustand bereitzustellen.

Aus der ebenfalls nachveröffentlichten WO03/064912 ist eine Pressverbindung bekannt, bei der an einem an dem Fitting eingelegten Dichtring ein Rohrende aufgeschoben ist und der Innendurchmesser des unverpressten Rohrendes zumindest bereichsweise größer als der Außendurchmesser des Dichtringes ist. Dadurch wird im unverpressten Zustand ein Strömungskanal zumindest zwischen Dichtring und Rohrende geschaffen.

Es ist daher Aufgabe der vorliegenden Erfindung, ein Verbindungsstück zur Herstellung einer verpressbaren Verbindungsanordnung zu schaffen, bei dem ein Vergessen des Verpressens sofort erkennbar ist, indem keine Abdichtung zwischen Verbindungsstück und Rohr im unverpressten Zustand gegeben ist und beim Prüfen des Anschlusses ein Fluid oder Luft austritt. Erst nach dem Verpressen sollte eine dauerhafte Abdichtung erreicht werden.

Diese Aufgabe wird mit einem Verbindungsstück mit den Merkmalen der Ansprüche 1 oder 2 erreicht.

Erfindungsgemäß ist an dem Stutzen mindestens ein radial hervorstehender Abstandshalter vorgesehen, mittels dem ein Spalt zur Ausbildung eines Strömungskanals zwischen dem Stutzen und dem Rohr definiert ist. Der Stutzen weist somit einen etwas geringeren Umfang auf, so dass ein geringfügiger Spalt zwischen Stutzen und Rohr vorgesehen ist, durch den im unverpressten Zustand ein in dem Rohr enthaltenes Fluid oder Luft ausströmen kann. Damit wird sofort sichtbar, dass ein Verpressen der Verbindung vergessen wurde. Der Abstandshalter hat dabei die Funktion, den Spalt zu fixieren, wobei das Verbindungsstück auch mit einer gewissen Klemmung an dem Abstandshalter angeordnet sein kann, um eine Vorfixierung zu erreichen. Im übrigen kann der Stutzen mit einem verpressbaren Abschnitt am Umfang im wesentlichen kreisförmig ausgebildet sein, so dass bekannte Presswerkzeuge mit runden Backen zum Verpressen vorgesehen werden können. Insofern ändert sich der Pressvorgang für den Installateur nicht, insbesondere kann die Verpressung unabhängig von einer möglichen Drehung des Verbindungsstückes in dem Rohr vorgenommen werden. Ferner spielen Herstellungstoleranzen des Rohres und des Stützkörpers für diese Funktion eine untergeordnete Rolle.

Gemäß einem ersten Aspekt der Erfindung sind die Abstandshalter zumindest teilweise ringförmig ausgebildet und weisen mindestens eine Unterbrechung zur Ausbildung eines Strömungskanals zwischen Stutzen und Rohr auf. Eine im wesentlichen ringförmige Ausbildung der Abstandshalter ermöglicht eine achsmittige Fixierung des Stutzens innerhalb des Rohres. Es ist aber auch möglich, andere Abstandshalter, beispielsweise Noppen, streifenformige Verdickungen, sich zu der Achse des Stutzens längs erstreckende Vorsprünge, schräg verlaufende Vorsprünge oder Rippen als Abstandshalter vorzusehen. Es ist lediglich erforderlich, dass durch die Abstandshalter ein Spalt zwischen dem übrigen Stutzen und dem Rohr fixiert wird.

Gemäß einem zweiten Aspekt der Erfindung ist an dem Anschlag des Verbindungsstückes eine Ausnehmung zur Bildung eines Strömungskanals zwischen der Stirnseite des Rohres und dem Anschlag vorgesehen. Es ist beabsichtigt, dass bei einem Vergessen des Verpressens und einem Anschließen des Leitungssystems ein Fluid oder Luft zwischen Rohr und Stutzen ausströmen kann. Eine ungewollte Abdichtung kann auch schon dann erfolgen, wenn das Rohr mit seiner Stirnkante lose an einem ebenen Anschlag des Verbindungsstückes anliegt. Um daher sicher zu gehen, dass nicht aus Versehen schon eine vorzeitige Abdichtung über die Stirnkante und den Anschlag des Rohres erfolgt, ist vorzugsweise mindestens eine Ausnehmung zur Bildung eines Strömungskanals vorgesehen, da diese auch nicht versehentlich verschlossen werden kann.

Gemäß einer bevorzugten Ausführungsform weist der Stutzen benachbart zu dem Abstandshalter einen im Querschnitt im wesentlichen ringförmigen verpressbaren Abschnitt auf, so dass bei Einsatz von bekannten Presswerkzeugen mit runden Pressbacken ein gleichmäßiger Anpressdruck im Bereich des verpressten Abschnittes erhalten wird. Der gleichmäßige Druck an dem Stutzen ermöglicht es, die Materialbelastung an dem Rohr und dem Stutzen gering zu halten.

Vorzugsweise ist an dem Stutzen ein erster Abstandshalter an einem Endabschnitt und ein zweiter Abstandshalter benachbart zu dem Anschlag vorgesehen. Dadurch wird der zwischen dem Rohr und dem Stutzen ausgebildete Spalt an zwei gegenüberliegenden Enden fixiert, so dass in der Mitte ein im wesentlichen kreisförmiger Umfang des Stutzens in dem zu verpressenden Bereich vorgesehen sein kann. Durch die beidseitige Abstützung wird auch erreicht, dass bei einem Einfügen des Rohres unter einer gewissen Vorspannung, also wenn das Rohr eine leichte Biegung erfährt, dennoch eine Undichtigkeit durch den Spalt gegeben ist, da das Rohr über die Länge des Stutzens weitgehend fixiert ist und nur ganz geringe Biegungen erfahren kann. Der Spalt wird durch solche Biegungen jedoch nicht verschlossen.

Um eine dauerhafte gegen Verschiebungen gesicherte Pressverbindung zu erhalten, ist vorzugsweise an dem Stutzen ein verpressbarer Abschnitt mit einer Vielzahl von am Außenumfang kreisförmigen Rippen vorgesehen. Dadurch kann sich das Material des Rohres in die Rippen eingraben, und eine Relativbewegung zwischen Stutzen und Rohr wird nach dem Verpressen vermieden.

Um eine dauerhafte Abdichtung der verpressten Verbindungsanordnung zu erhalten, ist vorzugsweise an dem Stutzen eine ringförmige Ausnehmung zur Aufnahme eines Dichtringes vorgesehen. Das Verbindungsstück kann dabei aus Metall oder auch aus einem Kunststoff hergestellt sein.

Erfindungsgemäß wird auch eine Verbindungsanordnung bereitgestellt, bei der ein entsprechendes Verbindungsstück mit einem Stutzen in ein Rohr eingeschoben ist. Um eine dauerhafte Deformation des Rohres zu erhalten, ist vorzugsweise eine Presshülse um den Endabschnitt des Rohres vorgesehen. Die Presshülse kann mittels eines Halteringes dabei vorfixiert an dem Verbindungsstück gehalten sein, so dass Presshülse, Haltering und Verbindungsstück eine vormontierte Einheit bilden. Statt einer Stützhülse kann das Rohr auch aus Metall ausgebildet sein und direkt auf den Stutzen des Verbindungsstückes gepresst werden.

Die Erfindung wird nachfolgend anhand eines Ausführungsbeispiels mit Bezug auf die beigefügten Zeichnungen näher erläutert. Es zeigen:

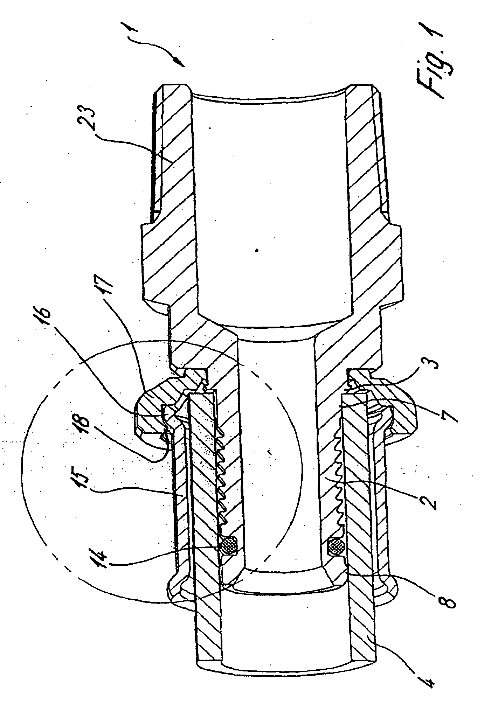

- Fig. 1: eine perspektivische Ansicht einer erfindungsgemäßen Verbindungsanordnung vor dem Verpressen;
- Fig. 2: eine Detailansicht der Fig. 1;
- Fig. 3: eine perspektivische Ansicht der Verbindungsanordnung der Fig. 1 nach dem Verpressen;

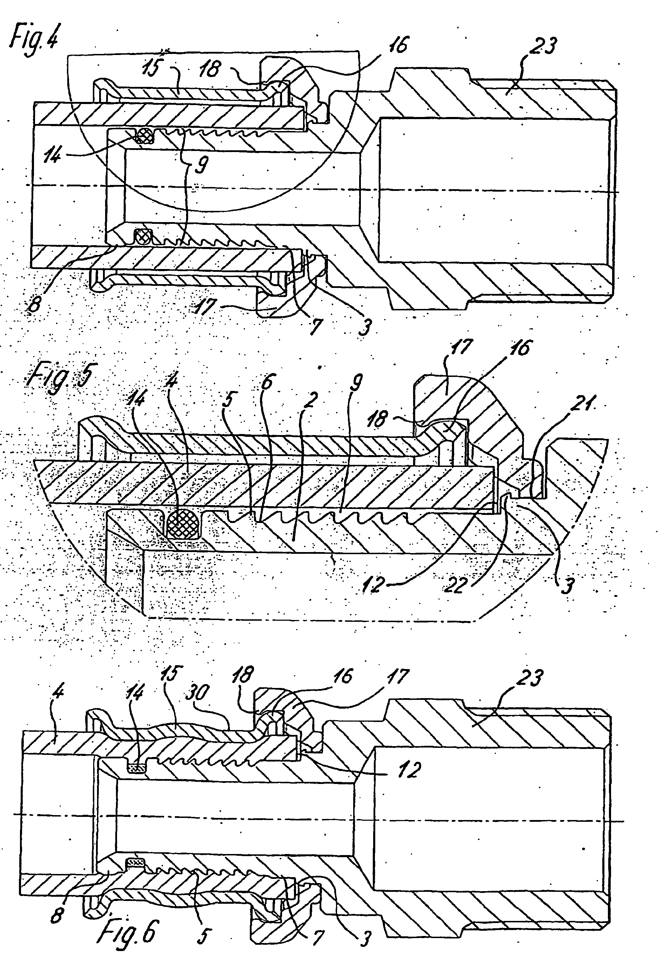

- Fig. 4: eine Schnittansicht der Verbindungsanordnung der Fig. 1;
- Fig. 5: eine Detailansicht der Fig. 4;
- Fig. 6: eine Seitenansicht der Verbindungsanordnung der Fig. 1 nach dem Verpressen;
- Fig. 7: eine Detailansicht des Stutzens eines erfindungsgemäßen Stützrohres.

Ein Verbindungsstück 1 umfasst einen Stutzen 2 und ein an der gegenüberliegenden Seite liegendes Anschlussteil 23, das als Armatur oder Verbindungseinrichtung ausgebildet sein kann, um ein weiteres Bauteil anzuschließen. Das Verbindungsstück 1 kann aus Metall oder Kunststoff hergestellt sein.

Der Stutzen 2 ist in ein Rohr 4 aus Kunststoff, aus einem Verbundmaterial oder aus Metall einfügbar, wobei an dem Stutzen 2 ein Anschlag 3 ausgebildet ist, so dass der Stutzen 2 bis zu einer definierten Einstecktiefe in das Rohr 4 eingeschoben ist. Der Stutzen 2 ist im Querschnitt im wesentlichen ringförmig ausgebildet und weist an seiner äußeren Umfangsfläche Profilierungen in Form von Rippen 5 und Rillen 6 auf, die im Querschnitt ebenfalls ringförmig ausgebildet sind.

An dem Stutzen 2 sind ferner Abstandshalter 7 und 8 vorgesehen, die formschlüssig oder mit einer gewissen Klemmung gegen eine Innenwand des Rohres 4 gehalten sind. Ein Abstandshalter 7 ist dabei benachbart zu dem Anschlag 3 vorgesehen und ein Abstandshalter 8 ist an dem äußeren Ende des Stutzens 2 ausgebildet. Durch die Abstandshalter 7 und 8 ist der mittlere Bereich des Stutzens 2 mit den Profilierungen 5 und 6 beabstandet von dem Rohr 4 angeordnet, so dass sich ein Spalt 9 zwischen Stutzen 2 und Rohr 4 ausbildet. Der Spalt 9 weist vorzugsweise eine Größe auf, die kleiner als 1 mm ist. Die Abstandshalter können auch an anderen Stellen im Bereich des Stutzens 2 liegen.

Die Abstandshalter 7 und 8 sind in dem gezeigten Ausführungsbeispiel durch ringförmige Vorsprünge gebildet, die zumindest an einer Stelle eine Abflachung 10 und 11 aufweisen. Durch die ringförmige Ausbildung der Abstandshalter 7 und 8 ist der Stutzen 2 konzentrisch in dem Rohr 4 fixiert. Dabei kann durch die Abflachungen 10 und 11 im unverpressten Zustand Fluid aus dem Rohr 4 über den Spalt 9 nach außen strömen, so dass ein versehentliches Vergessen des Verpressens sichtbar wird. Hierfür ist an dem Anschlag 3 eine Ausnehmung 12 vorgesehen, die zumindest an einer Stelle dafür sorgt, dass nicht versehentlich eine Abdichtung zwischen der Stirnkante des Rohres 4 und dem Anschlag 3 erfolgt. Die Ausnehmung 12 bildet somit eine Verlängerung des Spaltes 9 als Strömungskanal.

Statt der Abflachung 10 oder zusätzlich zu derselben können die Abstandshalter auch mit einer Rändelung versehen sein.

An dem Stutzen 2 ist ferner eine ringförmige Ausnehmung 13 vorgesehen, in die ein Dichtring 14 eingelegt ist. Auch der Dichtring 14 ist jedoch im unverpressten Zustand nicht in Kontakt mit dem Rohr 4.

Zur Herstellung einer verpressbaren Verbindungsanordnung ist im Bereich des Stutzens 2 um das Rohr 4 eine Presshülse 15 vorgesehen, die nach außen vorstehende ringförmige Vorsprünge 16 aufweist. Diese Vorsprünge 16 sind an einem Haltering 17 aufgenommen, der einen nach innen vorstehenden Abschnitt 18 aufweist, so dass der Vorsprung 16 an dem Haltering 17 nach Art einer Rast- oder Klemmverbindung festlegbar ist. Der Haltering 17 ist wiederum an dem Verbindungsstück 1 festgelegt, wobei ein innerer Abschnitt 21 des Halteringes 17 durch einen Anschlag 22 nur begrenzt axial bewegbar ist. Die Fixierung des Halteringes 17 und der Presshülse 15 erfolgt über Rast- oder Klemmeinrichtungen, kann aber auch über Gewinde oder andere Befestigungseinrichtungen erfolgen. Zumindest in dem dargestellten Ausführungsbeispiel bilden Verbindungsstück 1, Presshülse 15 und Haltering 17 eine vormontierbare Einheit.

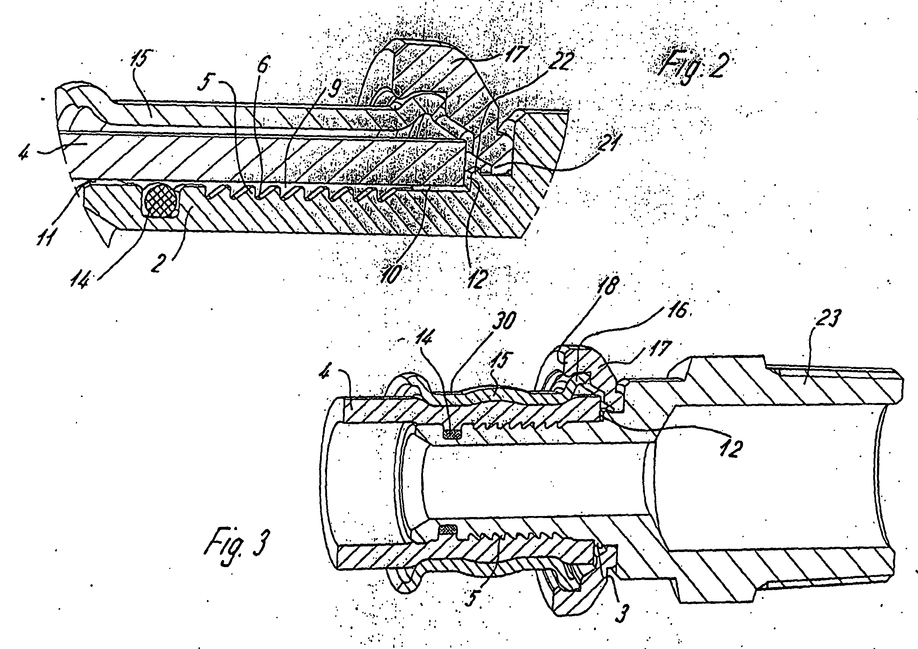

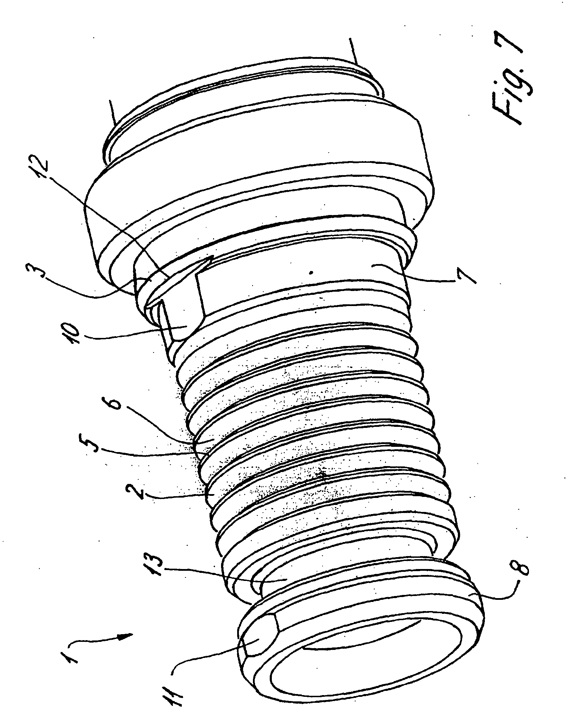

Zur Herstellung einer Pressverbindung wird das Rohr 4 zwischen Presshülse 15 und dem Stutzen 2 des als Stützrohr ausgebildeten Verbindungsstückes 1 eingeschoben, wobei durch die Abstandshalter 7 und 8 eine Vorfixierung des Rohres 4 erreicht wird. Selbst wenn das Rohr 4 außerhalb des Stutzens 2 gekrümmt ist und somit eine gewisse Vorspannung besitzt, gewährleisten die beabstandeten Abstandshalter 7 und 8 eine Ausrichtung des Rohres 4 derart, dass ein Spalt 9 zwischen Rohr 4 und Stutzen 2 gebildet ist. Anschließend kann mit einem bekannten Presswerkzeug mit runden Pressbacken die Stützhülse 15 auf das Rohr 4 und das Rohr 4 auf den Stutzen 2 gepresst werden. Dadurch dringt das Material des Rohres 4 in die Rillen 6 des Stutzens 2 ein und der Dichtring 14 wird durch das Material des Rohres 4 komprimiert, wie dies in den Figuren 3 und 6 dargestellt ist. Die so hergestellte Verbindungsanordnung gewährleistet auch auf Dauer eine Abdichtung zwischen Stutzen 2 und Rohr 4.

An der Presshülse 15 bilden sich durch die Verpressung Preßstellen 30 aus. In dem dargestellten Ausführungsbeispiel ist das Rohr 4 aus Kunststoff oder einem Verbundmaterial hergestellt. Es ist auch möglich, das Rohr 4 ganz oder teilweise aus Metall herzustellen, wobei dann auch auf eine Stützhülse 15 verzichtet werden kann.

Ferner weist der Stutzen 2 in dem dargestellten Ausführungsbeispiel Rippen 5, Rillen 6 sowie eine Ausnehmung 13 für einen Dichtring 14 auf. Es ist auch möglich, den Stutzen 2 glatt auszubilden oder andere Profilierungen vorzusehen, die nach dem Verpressen ein Verrutschen des Rohres 4 verhindern sollen.

## Patentansprüche

1. Verbindungsstück (1) zur Herstellung einer verpressbaren Verbindungsanordnung, mit einem in ein Rohr (4) einfügbaren Stutzen (2), an dem Profilierungen (5, 6) zur Verpressung mit dem Rohr (4) vorgesehen sind und der bis zu einem Anschlag (3) in das Rohr (4) einschiebbar ist, **dadurch gekennzeichnet, dass** an dem Stutzen (2) mindestens ein radial hervorstehender Abstandshalter (7, 8) vorgesehen ist, mittels dem ein Spalt (9) zwischen dem Stutzen (2) und dem Rohr (4) definiert ist, der im nicht verpressten Zustand einen Strömungskanal bildet, und
die Abstandshalter (7, 8) zumindest teilweise ringförmig ausgebildet sind und mindestens eine Unterbrechung (10, 11) zur Ausbildung eines Strömungskanals zwischen Stutzen (2) und Rohr (4) aufweisen.

2. Verbindungsstück (1) zur Herstellung einer verpressbaren Verbindungsanordnung, mit einem in ein Rohr (4) einfügbaren Stutzen (2), an dem Profilierungen (5, 6) zur Verpressung mit dem Rohr (4) vorgesehen sind und der bis zu einem Anschlag (3) in das Rohr (4) einschiebbar ist, **dadurch gekennzeichnet, dass** an dem Stutzen (2) mindestens ein radial hervorstehender Abstandshalter (7, 8) vorgesehen ist, mittels dem ein Spalt (9) zwischen dem Stutzen (2) und dem Rohr (4) definiert ist, der im nicht verpressten Zustand einen Strömungskanal bildet, und
an dem Anschlag (3) eine Ausnehmung (12) zur Bildung eines Strömungskanals (20) zwischen der Stirnseite des Rohres (4) und dem Anschlag (3) vorgesehen ist.

3. Verbindungsstück nach Anspruch 1 oder 2, **dadurch gekennzeichnet, dass** der Stutzen (2) benachbart zu dem Abstandshalter (7, 8) einen im Querschnitt im wesentlichen ringförmigen im Durchmesser gegenüber dem Abstandshalter (7, 8) geringfügig reduzierten verpressbaren Abschnitt aufweist.

4. Verbindungsstück nach einem der Ansprüche 1 bis 3, **dadurch gekennzeichnet, dass** an dem Stutzen (2) ein erster Abstandshalter (8) an einem Endabschnitt und ein zweiter Abstandshalter (7) benachbart zu dem Anschlag (3) vorgesehen ist.

5. Verbindungsstück nach einem der Ansprüche 1 bis 4, **dadurch gekennzeichnet, dass** an dem Stutzen (2) ein oder mehrere Abstandshalter (7, 8) vorgesehen sind.

6. Verbindungsstück nach einem der Ansprüche 1 bis 5, **dadurch gekennzeichnet, dass** die Abstandshalter (7, 8) am Außendurchmesser gerändelt sind.

7. Verbindungsstück nach einem der Ansprüche 1 bis 6, **dadurch gekennzeichnet, dass** an dem Stutzen (2) ein verpressbarer Abschnitt mit einer Vielzahl von am Außenumfang kreisförmigen Rippen (5) vorgesehen ist.

8. Verbindungsanordnung, insbesondere für den Installationsbereich, mit einem Rohr (4), in das ein Stutzen (2) eines Verbindungsstückes (1) nach einem der vorhergehenden Ansprüche eingeschoben ist.

## Claims

1. A fitting (1) for creating a press-fittable connecting arrangement, with a connecting piece (2) insertable in a pipe (4) and provided with a profiling (5, 6) for press-fitting to the pipe (4) and being insertable into the pipe (4) up to a shoulder (3), **characterized in that** at least one radially projecting spacer (7, 8) is provided on the connecting piece (2) which defines a gap (9) between the connecting piece (2) and the pipe (4) which forms a flow channel in its not yet press-fitted state, and
the spacers (7, 8) are ring-shaped at least in part and have at least one gap (10, 11) to create a flow channel between connecting piece (2) and pipe (4).

2. A fitting (1) for creating a press-fittable connecting arrangement, with a connecting piece (2) insertable in a pipe (4) and provided with a profiling (5, 6) for press-fitting to the pipe (4) and being insertable into the pipe (4) up to a shoulder (3), **characterized in that** at least one radially projecting spacer (7, 8) is provided on the connecting piece (2) which defines a gap (9) between the connecting piece (2) and the pipe (4) which forms a flow channel in its not yet press-fitted state, and
a recess (12) is provided on the shoulder (3) to form a flow channel (20) between the front end of the pipe (4) and the shoulder (3).

3. The fitting of claim 1 or 2, **characterized in that** the connecting piece (2) adjacent to the spacer (7, 8) has a press-fittable section largely ring shaped in cross-section and slightly reduced in diameter vis-à-vis the spacer (7, 8).

4. The fitting of claims 1 to 3, **characterized in that** on the connecting piece (2) a first spacer (8) is provided on an end section and a second spacer (7) adjacent to the shoulder (3).

5. The fitting of claims 1 to 4, **characterized in that** one or several spacers (7, 8) are provided on the connecting piece (2).

6. The fitting of claims 1 to 5, **characterized in that** the external circumference of the spacers (7, 8) is knurled.

7. The fitting of claims 1 to 6, **characterized in that** a press-fittable section is provided on the connecting piece (2) with a number of circular ribs (5) on the outer circumference.

8. Connecting arrangement, in particular for the plumbing sector, having a pipe (4) into which a connecting piece (2) of a fitting (1) as claimed in one of the foregoing claims is inserted.

## Revendications

1. Elément de raccordement (1) pour la réalisation d'un dispositif de raccordement pouvant être serré, comportant un embout (2) pouvant être inséré dans un tube (4) et sur lequel sont prévus des profilages (5, 6) pour réaliser le serrage avec le tube (4) et qui peut être enfoncé dans le tube (4) jusqu'à une butée (3), **caractérisé en ce que** sur l'embout (2) est prévue au moins une entretoise (7, 8) qui fait saillie radialement et au moyen de laquelle est définie, entre l'embout (2) et le tube (4), une fente (9) qui, à l'état non comprimé, forme un canal d'écoulement, et **en ce que**
les entretoises (7, 8) sont agencées partiellement avec une forme annulaire et comportent au moins une interruption (10, 11) pour la formation d'un canal d'écoulement entre l'embout (2) et le tube (4).

2. Elément de raccordement (1) pour la réalisation d'un dispositif de raccordement pouvant être serré, comportant un embout (2) pouvant être inséré dans un tube (4) et sur lequel sont prévus des profilages (5, 6) pour réaliser le serrage avec le tube (4) et qui peut être enfoncé dans le tube (4) jusqu'à une butée (3), **caractérisé en ce que** sur l'embout (2) est prévue au moins une entretoise (7, 8) qui fait saillie radialement et à l'aide de laquelle est définie, entre l'embout (2) et le tube (4), une fente (9) qui, à l'état non serré, forme un canal d'écoulement, et **en ce que**
sur la butée (3) est prévu un évidement (12) servant à former un canal d'écoulement (20) entre la face frontale du tube (4) et la butée (3).

3. Elément de raccordement selon la revendication 1 ou 2, **caractérisé en ce que** l'embout (2) comporte, au voisinage de l'entretoise (7, 8), une partie pouvant être serrée, de section transversale essentiellement annulaire et dont le diamètre est légèrement réduit par rapport à l'entretoise (7, 8).

4. Elément de raccordement selon l'une des revendications 1 à 3, **caractérisé en ce que** sur l'embout (2) une première entretoise (8) est prévue dans une zone d'extrémité et une seconde entretoise (7) est prévue au voisinage de la butée (3).

5. Elément de raccordement selon l'une des revendications 1 à 4, **caractérisé en ce qu'**une ou plusieurs entretoises (7, 8) sont prévues sur l'embout (2).

6. Elément de raccordement selon l'une des revendications 1 à 5, **caractérisé en ce que** les entretoises (7, 8) sont moletées au niveau de leur périphérie extérieure.

7. Elément de raccordement selon l'une des revendications 1 à 6, **caractérisé en ce que** sur l'embout (2) est prévue une partie pouvant être serrée comportant une multiplicité de nervures (5) de forme circulaire sur la périphérie extérieure.

8. Dispositif de raccordement, notamment pour le domaine de la tuyauterie, comportant un tube (4) dans lequel est enfoncé un embout (2) d'un élément de raccordement (1) selon l'une des revendications précédentes.
